# EUROPÄISCHE PATENTSCHRIFT

(11) **EP 3 363 264 B1**
(45) Veröffentlichungstag und Bekanntmachung des Hinweises auf die Patenterteilung: **06.11.2019**
(21) Anmeldenummer: 16762787.6
(22) Anmeldetag: 07.09.2016
(51) Int. Cl.: H05B 33/08, B60Q 1/14

(54) **LEUCHTDICHTEREGULIERUNG AN RANDBEREICHEN**
LUMINANCE REGULATION IN EDGE REGIONS
RÉGULATION DE LA LUMINANCE SUR DES ZONES MARGINALES

(30) Priorität: 13.10.2015 DE 102015219789
(43) Veröffentlichungstag der Anmeldung: 22.08.2018
(73) Patentinhaber: OSRAM GmbH, 80807 München (DE)
(72) Erfinder: FIEDERLING, Roland, 86316 Friedberg (DE); KÜRSCHNER, Ronny, 93164 Laaber (DE); FEIL, Thomas, 73574 Iggingen (DE)
(86) Internationale Anmeldenummer: PCT/EP2016/071009
(87) Internationale Veröffentlichungsnummer: WO 2017/063792

(56) Entgegenhaltungen:
- WO-A1-2014/195347
- WO-A1-2014/195347
- DE-A1-102011 108 384
- DE-A1-102011 108 384
- KR-A- 20180 008 205

## Beschreibung

Die vorliegende Erfindung betrifft ein Verfahren zum Betreiben einer Beleuchtungsvorrichtung, die mindestens zwei durch einen Spalt getrennte, nebeneinander angeordnete Leuchteinrichtungen mit jeweils einer Vielzahl an Leuchtelementen aufweist, für ein Kraftfahrzeug durch einzelnes Ansteuern aller Leuchtelemente jeder Leuchteinrichtung. Darüber hinaus betrifft die vorliegende Erfindung eine Beleuchtungsvorrichtung für ein Kraftfahrzeug mit mindestens zwei, durch einen Spalt getrennte, nebeneinander angeordnete Leuchteinrichtungen mit jeweils einer Vielzahl an Leuchtelementen, und einer Steuereinrichtung zum einzelnen Ansteuern aller Leuchtelemente jeder Leuchteinrichtung. Ferner betrifft die vorliegende Erfindung ein Kraftfahrzeug mit einer solchen Beleuchtungsvorrichtung.

Moderne Kraftfahrzeuge besitzen beispielsweise so genannte Pixelscheinwerfer, mit denen einzelne Lichtpunkte beziehungsweise Pixel in einer größeren Matrix angesteuert werden können. Durch dieses einzelne Ansteuern jedes Pixels ist es möglich, durch einen entsprechenden Kraftfahrzeugscheinwerfer gezielt einzelne Bereiche vor dem Kraftfahrzeug auszuleuchten.

Ein Pixelscheinwerfer wird beispielsweise durch eine Matrix von LEDs realisiert. Dadurch ergibt sich eine Leuchtfläche, die auch als LED-Fläche, Chip-Fläche oder hochpixelierte LED bezeichnet werden kann.

Die maximal mögliche Größe einer monolithisch hergestellten Leuchtfläche ist bei Halbleiterlichtquellen fertigungstechnisch begrenzt. Will man eine größere Leuchtfläche generieren, so ist es nötig, die Lichtquelle ab dieser Größe in mehrere einzelne LED-Flächen aufzuteilen und diese so nah wie möglich aneinander zu platzieren, um eine über die komplette Fläche möglichst homogene Leuchtdichte zu erreichen. Die damit erzielbare Beleuchtungsvorrichtung weist also eine matrix-artige Struktur auf.

Aus fertigungstechnischen Gründen ist es jedoch nötig, zwischen den einzelnen Leuchteinrichtungen, d. h. den LED-Flächen beziehungsweise Chip-Flächen, einen Spalt vorzuhalten. Dieser Spalt entsteht dadurch, dass beispielsweise ein einzelner durch Epitaxie hergestellter hochpixelierter Chip am Rand mittels Diamanten geritzt und anschließend gebrochen oder alternativ gesägt werden muss. Bei einem solchen Trennverfahren muss am Rand ein Toleranzbereich eingehalten werden, um die äußeren LEDs nicht zu beschädigen. Werden nun zwei solcher Chips beziehungsweise Leuchteinrichtungen zusammengefügt, ergibt sich zwischen ihnen ein entsprechender Spalt z. B. von 0,02 bis 0,12 mm. Durch diesen Spalt kommt es in der Leuchtdichteverteilung über die gesamte Fläche zu einem Abfall der Leuchtdichte.

Die LEDs bzw. die Chip-Flächen können direkt emittierende, also im Wesentlichen monochrom im sichtbaren, infraroten oder ultravioletten Spektralbereich emittierende, Leuchtdioden sein und/oder, hier bevorzugt, sogenannte Phosphorkonvertierende Leuchtdioden , also solche, bei denen z.B. blaue Lichtemission der Halbleiter-Chips auf einen auf der Chipfläche aufgebrachten Leuchtstoff trifft. Der Leuchtstoff, auch als Konversionselement oder Phosphor bezeichnet, kann beispielsweise ein gelber Cer-YAG-Leuchtstoff (Ce:YAG) sein, der die blaue Anregungsstrahlung anteilig in gelbes Konversionslicht umwandelt. Die Überlagerung von nicht konvertiertem blauem Anregungslicht und gelbem Konversionslicht ergibt dann das Nutzlicht, das je nach Konversionsgrad der Leuchtstoffanordnung entweder einen bläulich-weißen, weißen, oder gelblich-weißen Farbeindruck aufweist. In der Automobilindustrie wird der Farbort einer Lichtquelle eines Frontscheinwerfers für Abblend- und Fernlicht durch die ECE-Norm geregelt.

Die Aufgabe der vorliegenden Erfindung besteht somit darin, ein Verfahren bereitzustellen, mit dem eine markante Reduktion der Leuchtdichteverteilung in einem Spalt zwischen zwei Leuchteinrichtungen beim Ansteuern einer Beleuchtungsvorrichtung besser vermieden werden kann. Darüber hinaus soll eine entsprechende Beleuchtungsvorrichtung vorgeschlagen werden.

Erfindungsgemäß wird diese Aufgabe gelöst durch ein Verfahren nach Anspruch 1 sowie eine Beleuchtungsvorrichtung nach Anspruch 9. Vorteilhafte Weiterbildungen der Erfindung ergeben sich aus den Unteransprüchen.

Entsprechend der vorliegenden Erfindung wird demnach bereitgestellt ein Verfahren zum Betreiben einer Beleuchtungsvorrichtung, die mindestens zwei, durch einen Spalt getrennte, nebeneinander angeordnete Leuchteinrichtungen mit jeweils einer Vielzahl an Leuchtelementen aufweist, für ein Kraftfahrzeug durch einzelnes Ansteuern aller Leuchtelemente jeder Leuchteinrichtung, Messen einer Spaltbreite des Spalts und/oder einer Leuchtdichte in dem Spalt und Steuern oder Regeln jeweils einer Leuchtdichte eines oder mehrerer der Leuchtelemente, die unmittelbar (optional auch etwas beabstandet) an dem Spalt angeordnet sind, in Abhängigkeit von der Spaltbreite und/oder von der Leuchtdichte in dem Spalt und optional auch von der Position des Leuchtelements in der Matrix.

Darüber hinaus wird erfindungsgemäß bereitgestellt eine Beleuchtungsvorrichtung für ein Kraftfahrzeug mit mindestens zwei, durch einen Spalt getrennte, nebeneinander angeordnete Leuchteinrichtungen mit jeweils einer Vielzahl an Leuchtelementen, und einer Steuereinrichtung zum einzelnen Ansteuern aller Leuchtelemente jeder Leuchteinrichtung, sowie mit einer Speichereinrichtung zum Bereitstellen eines Maßes einer Spaltbreite des Spalts und/oder einer Leuchtdichte in dem Spalt, wobei die Steuereinrichtung ausgebildet ist zum Steuern oder Regeln jeweils einer Leuchtdichte eines oder mehrerer der Leuchtelemente, die unmittelbar an dem Spalt angeordnet sind, in Abhängigkeit von der Spaltbreite und/oder von der Leuchtdichte in dem Spalt und optional auch von der Position des Leuchtelements in der Matrix.

Die Beleuchtungsvorrichtung besitzt also mindestens zwei durch einen Spalt getrennte, nebeneinander angeordnete Leuchteinrichtungen. Beispielsweise kann es sich jeweils um rechteckige Leuchteinrichtungen handeln, die an einer Seite aneinander gefügt sind. Es kann sich aber auch beispielsweise um vier rechteckige oder quadratische Leuchteinrichtungen handeln, die miteinander zu einem größeren Rechteck oder Quadrat zusammengefügt sind, wobei sich dann zwischen den einzelnen Leuchteinrichtungen ein kreuzförmiger Spalt ergibt. Darüber hinaus können aber auch dreieckige Leuchteinrichtungen aneinander gefügt werden, wobei sich zwischen ihnen ein Spalt mit 3, 4, 5 usw. Enden ergibt. Auch beliebige andere Anordnungen sind möglich.

Jede der Leuchteinrichtungen besitzt eine Vielzahl an Leuchtelementen. Vorzugsweise sind diese Leuchtelemente matrixförmig angeordnet. Bei jedem Leuchtelement kann es sich um eine LED oder sonstige punktförmige oder streifenförmige Lichtquelle handeln.

Die Leuchtelemente aller Leuchteinrichtungen werden einzeln angesteuert. Dies bedeutet, dass die Leuchtelemente unabhängig voneinander in ihrer Leuchtstärke beziehungsweise Leuchtdichte variierbar sind. Auf diese Weise lassen sich beliebige Leuchtmuster erzielen. Vorzugsweise wird diese unabhängige Ansteuerbarkeit jedoch auch dazu benutzt, eine möglichst homogene Lichtverteilung über mehrere Leuchteinrichtungen hinweg zu erzielen, und zwar nicht nur im Nominalleistungsbetrieb der einzelnen Leuchtelemente, sondern auch bei reduzierten Leistungsstufen, also zum Beispiel im Dimm-Betrieb.

Als Eingangsparameter für die Steuerung beziehungsweise Regelung der Beleuchtungsvorrichtung kann die Spaltbreite des Spalts und/oder die Leuchtdichte in dem Spalt zwischen den Leuchteinrichtungen dienen. Diese Eingangsgrößen müssen individuell für jede Beleuchtungsvorrichtung gemessen werden, da sie fertigungstechnisch variieren. So kann sich beispielsweise bei epitaktisch hergestellten Chips beim Aneinanderfügen, wie eingangs erwähnt, ein Spalt zwischen beispielsweise 0,02 und 0,12 mm ergeben. Diese unterschiedliche Spaltbreite wirkt sich entsprechend auf die Leuchtdichteverteilung quer zu dem Spalt aus. Gemäß einer ersten Alternative kann die Spaltbreite des Spalts gemessen werden und es wird mittels eines Modells auf die entsprechende Leuchtdichteverteilung am Spalt geschlossen. Alternativ kann die Leuchtdichte im Spalt auch direkt gemessen werden. Dabei bedeutet "in dem Spalt" eine Stelle unmittelbar in dem Spalt oder senkrecht darüber oder aber auch in einem vorgegebenen optischen Pfad des Spalts. Gegebenenfalls können auch beide Parameter, nämlich Spaltbreite und Leuchtdichte im Spalt, gemessen und miteinander beispielsweise zur Erhöhung der Genauigkeit zum Steuern oder Regeln verwendet werden.

Schließlich wird die Leuchtdichte eines oder mehrerer der Leuchtelemente, die unmittelbar an dem Spalt angeordnet sind, in Abhängigkeit von der Spaltbreite und/oder von der Leuchtdichte in dem Spalt gesteuert oder geregelt. Es werden also insbesondere Leuchtelemente am Rand jeder Leuchteinrichtung, der jeweils zum Spalt gerichtet ist, spezifisch in Abhängigkeit von Spaltbreite beziehungsweise Leuchtdichte im Spalt reguliert. Die Regelung der Pixel kann so erfolgen, dass die geforderten Kontrastwerte eingehalten werden. Kontrastwert bedeutet hier, dass zwischen einem angeschalteten Pixel, oder einer angeschalteten Pixelreihe, und einem abgeschalteten Pixel bzw. Pixelreihe, ein gewisser Leuchtdichtekontrast vorhanden sein muss, beispielsweise 1:50, 1:100, 1:200. Dabei kann das Ansteuerverfahren berücksichtigen, dass die Leuchtdichte jedes der Rand-Pixel einen individuell vorgebbaren Leuchtdichtewert (individueller Maximalwert) nicht überschreitet. Der Maximalwert kann zum Beispiel auf die mittlere Leuchtdichte einer Zeile bezogen sein, oder auf die Summenleuchtdichte der gesamten Beleuchtungsvorrichtung. Damit können Leuchteinbußen, die sich durch den Spalt ergeben, zielgerichtet ausgeglichen werden. Vorzugsweise erfolgt zusätzlich ein Messen jeweils einer Leuchtdichte des einen oder der mehreren der Leuchtelemente, die unmittelbar an dem Spalt angeordnet sind, und ebenso erfolgt das Steuern oder Regeln auch in Abhängigkeit von dem/den entsprechenden Messwert/Messwerten. Die Leuchtdichte der am Rand gelegenen Leuchtelemente kann somit als Basis für die Regulierung der Leuchtdichte der Leuchtelemente (z. B. LEDs) verwendet werden.

Des Weiteren kann bei dem Steuern oder Regeln eine Leuchtdichte eines der Leuchtelemente, die unmittelbar an dem Spalt angeordnet sind, an eine mittlere Leuchtdichte aller oder einer Vielzahl der Leuchtelemente der Leuchteinrichtungen angepasst werden. Werden beispielsweise alle oder ein Großteil der Leuchtelemente hinsichtlich ihrer Leuchtdichte vermessen, so kann die Leuchtdichte im Spalt auf einen entsprechenden Mittelwert eingestellt werden bzw. auf einen Wert, der innerhalb eines vorgebbaren Intervalls um den Mittelwert herum liegen muss, beispielsweise im Bereich von maximal des 1,2 fachen des Mittelwerts und minimal des 0.8 fachen des Mittelwerts. Bei einem Leuchtdichtegradienten ist es beispielsweise notwendig, den mittleren Leuchtdichtewert über eine Zeile zu bestimmen und die Leuchtdichte im Spalt auf den entsprechenden Mittelwert der Zeile einzustellen. In diesem Fall entspricht die Vielzahl der Leuchtelemente, die für die Regulierung der Leuchtdichte im Spalt verwendet wird, beispielsweise der Gesamtheit oder dem größten Teil der Leuchtelemente in einer Zeile beziehungsweise Spalte der matrixförmig angeordneten Leuchtelemente.

Speziell können von dem Steuern oder Regeln auch diejenigen Leuchtelemente betroffen sein, die in zweiter und/oder dritter Reihe hinter den unmittelbar am Spalt angeordneten Leuchtelementen liegen. Es werden also nicht nur diejenigen Leuchtelemente unmittelbar am Spalt speziell zum Ausgleich der Leuchtdichte reguliert, sondern auch weiter hinten liegende Leuchtelemente, die einen mit steigendem Abstand vom Spalt abnehmenden Einfluss auf die Leuchtdichte im beziehungsweise am Spalt haben. Beispielsweise können so die Leuchtdichten zum Spalt hin entsprechend einer Rampe mit linearer oder nicht linearer Funktion zunehmen.

Gemäß einer weiteren Ausführungsform kann die Beleuchtungsvorrichtung mindestens eine weitere Leuchteinrichtung aufweisen, wobei jeweils eine Ecke jeder der Leuchteinrichtungen aneinander angeordnet sind und zu dem Steuern oder Regeln eines Leuchtelements an einer der Ecken einer der Leuchteinrichtungen je eine Leuchtdichte eines Leuchtelements jeder anderen der anliegenden Ecken berücksichtigt wird. Stoßen beispielsweise vier quadratische Leuchtflächen aneinander, so beeinflussen sich die Leuchtdichten an den Eckpunkten der vier Leuchteinrichtungen gegenseitig. Für die Steuerung beziehungsweise Regelung einer Leuchtdichte eines Leuchtelements werden damit nicht nur die Leuchtdichten der Leuchtelemente der eigenen Leuchteinrichtung (z. B. LED-Fläche beziehungsweise Chip-Fläche) benutzt, sondern auch die Leuchtdichte beziehungsweise die Leuchtdichten von Leuchtelementen anderer Leuchteinrichtungen. An den Grenzen beeinflussen sich also die Leuchtdichten übergreifend über mehrere Leuchteinrichtungen.

Ferner kann bei dem Steuern oder Regeln eine Leuchtdichte eines der Leuchtelemente, die an einem Randbereich, an welchem keine Leuchteinrichtung unmittelbar angrenzt, der jeweiligen Leuchteinrichtung angeordnet sind, an eine mittlere Leuchtdichte aller Leuchtelemente der Leuchteinrichtungen angepasst werden. Dies bedeutet, dass nicht nur die Grenze zwischen zwei Leuchteinrichtungen hinsichtlich ihrer Leuchtdichte homogenisiert wird, sondern dass auch angestrebt wird, dass am Rand der Leuchteinrichtungen eine vorgegebene Soll-Leuchtdichte erreicht wird. Dabei wird also berücksichtigt, dass über den Rand hinaus keine Leuchtelemente mehr vorhanden sind, die die Leuchtdichte am Rand beeinflussen könnten.

Das Steuern oder Regeln kann beispielsweise mit einer Korrekturmatrix erfolgen. In einer solchen Korrekturmatrix könnten die Einflussfaktoren der jeweils benachbarten Leuchtelemente aller Leuchtelemente der Leuchteinrichtungen durch Vorabbestimmungen berücksichtigt werden. Damit ließe sich eine Steuerung beziehungsweise Regelung entsprechend rasch ausführen. Eine Regelung bzw. Steuerung jedes einzelnen Leuchtelements kann insbesondere bedeuten, dass jedes Leuchtelement mit einem individuellen Strom- und/oder Taktungswert, beispielsweise einer Pulsweitenmodulation PWM, betrieben wird. Alternativ könnte die Optimierung der Leuchtdichte am Rand beziehungsweise am Spalt auch durch Monte-Carlo-Simulationen durchgeführt werden. Dabei werden diejenigen Ansteuerwerte, beispielsweise Strom und Taktung, für die Leuchtelemente solange variiert, bis sich eine optimale Verteilung ergibt.

Das Messen der Leuchtdichte kann gepulst bei Umgebungstemperatur oder in einem thermisch eingeschwungenen Ein-Zustand erfolgen. Üblicherweise erfolgt die Leuchtdichtemessung bei LEDs im kalten Zustand, d.h. bei Umgebungstemperatur. Diese bleibt im Wesentlichen unverändert, wenn zur Leuchtdichtemessung nur kurze Impulse verwendet werden. Bei längerer Einschaltzeit erwärmt sich das Leuchtelement (z. B. die Diode) in der Regel, was zu einem Abfall der Leuchtdichte führt. Trotzdem kann auch in einem thermisch eingeschwungenen Betriebszustand eine Leuchtdichtemessung erfolgen. Die Vermessung findet, wie oben angemerkt, vor dem Einsatz im Fahrzeug statt. Beim Betrieb kann beispielsweise ein Cluster an Leuchtelementen in einer Ecke eingeschaltet werden. An der anderen Ecke nur ein Einzelpixel. Weil sich das Cluster stärker erwärmt als das Einzelleuchtelement fällt die Leuchtdichte dort stärker ab.

Die oben im Zusammenhang mit dem erfindungsgemäßen Verfahren beschriebenen Merkmale können auch als jeweilige funktionelle Merkmale der erwähnten erfindungsgemäßen Beleuchtungsvorrichtung dienen. Damit lassen sich die Vorteile für das erfindungsgemäße Verfahren auch auf die Beleuchtungsvorrichtung übertragen.

Die Beleuchtungsvorrichtung, wie sie oben geschildert wurde, kann speziell in einem Kraftfahrzeug eingesetzt werden, z.B. als Frontscheinwerfer, aber auch für Gebäudebeleuchtung (innen und außen), als Schiffsscheinwerfer, als Effektbeleuchtung, Projektionseinrichtungen für Daten-, Video- und Filmprojektionen, Head-up-Displays, medizinische Untersuchungs-, Analyse-, Geräte- und Therapieleuchten, für industrielle Bildverarbeitung, als (Blau/UV-)Beleuchtung in der Druckindustrie (z.B. Aushärten von Klebstoff) und für funktionale Darstellung von Bildern etc. Darüber hinaus kann sie aber auch für andere dynamische Anwendungen und für statische Beleuchtungsvorrichtungen verwendet werden. In jedem Fall werden Leuchtdichteeinbrüche, wie sie durch Spalte zwischen Leuchteinrichtungen entstehen, vermieden bzw. reduziert.

Die vorliegende Erfindung wird nun anhand der beigefügten Zeichnungen näher erläutert, in denen zeigen:
- Fig. 1: eine Draufsicht auf eine beispielhafte Beleuchtungsvorrichtung mit symbolisch angedeuteter Beschaltung;
- Fig. 2: eine Draufsicht auf zwei nebeneinander angeordnete Leuchteinrichtungen in Betrieb;
- Fig. 3: eine Leuchtdichteverteilung der Leuchteinrichtungen von Fig. 2 entlang einer vorgegebenen Linie;
- Fig. 4: eine Ausführungsform mit vier quadratischen Leuchteinrichtungen; und
- Fig. 5: eine Leuchtdichteverteilung an einem Randbereich von zwei der Leuchteinrichtungen von Fig. 4.

Die nachfolgend näher geschilderten Ausführungsbeispiele stellen bevorzugte Ausführungsformen der vorliegenden Erfindung dar. Dabei ist zu beachten, dass die Merkmale nicht nur in den geschilderten Kombinationen, sondern auch in anderen technisch sinnvollen Kombinationen oder auch in Alleinstellung realisiert werden können.

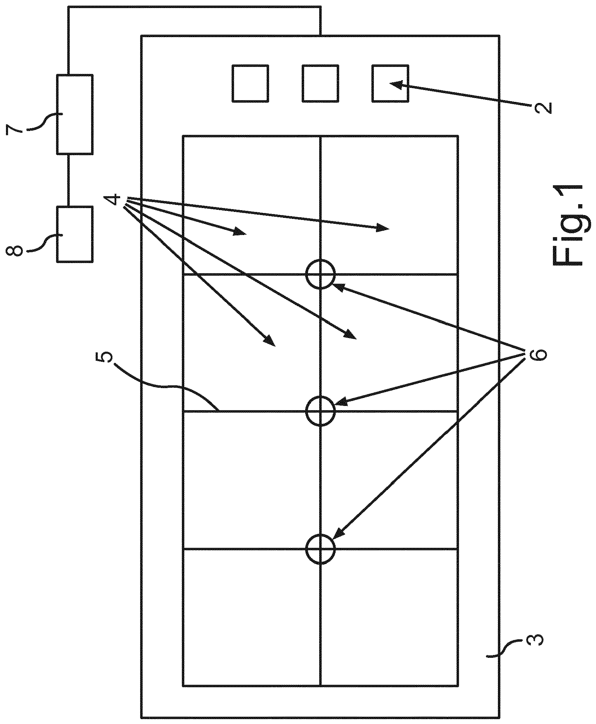

Fig. 1 zeigt ein Ausführungsbeispiel einer Beleuchtungsvorrichtung, wie sie beispielsweise für ein Kraftfahrzeug verwendet werden kann. Sie besitzt einen Ansteuerchip 3 mit einem Ansteuerinterface 2. Der Ansteuerchip 3 kann aus Silizium gefertigt sein.

Auf dem Ansteuerchip 3 sind hier acht quadratische Leuchteinrichtungen 4 unmittelbar angrenzend aneinander angeordnet. Bei den Leuchteinrichtungen 4 handelt es sich beispielsweise um LED-Chips mit jeweils einer Matrix von z. B. nx n LEDs beziehungsweise Leuchtelementen. Die einzelnen Leuchteinrichtungen 4 sind voneinander durch einen jeweiligen Spalt 5 getrennt. In dem Beispiel von Fig. 1 mit den acht Leuchteinrichtungen 4 ist der Spalt gitterförmig ausgebildet und besteht aus mehreren Einzelspalten, die von Kreuzungspunkten 6 ausgehen. Die Anzahl, Größe und Form der Leuchteinrichtungen 4 sowie der Leuchtelemente selbst kann innerhalb einer Beleuchtungsvorrichtung unterschiedlich sein.

Die Beleuchtungsvorrichtung muss mindestens zwei Leuchteinrichtungen aufweisen, die durch einen Spalt 5 voneinander getrennt sind. Sie kann aber auch 3, 4, 5, 6 usw. Leuchteinrichtungen beziehungsweise LED-Chips oder dergleichen aufweisen.

Die gesamte Anordnung der Leuchteinrichtungen muss nicht zentral auf dem Ansteuerchip 3 angeordnet sein. Vielmehr kann die Anordnung auch exzentrisch auf dem Ansteuerchip 3 angeordnet sein. Darüber hinaus muss es sich bei den Leuchteinrichtungen 4 nicht um quadratische Bauelemente handeln. Sie können beispielsweise auch rechteckig geformt oder mit einer anderen Geometrie ausgestattet sein.

Eine Leuchteinrichtung 4 wird beispielsweise durch Epitaxie hergestellt und kann somit als "Einzelepitaxie" bezeichnet werden. Darunter ist dann, wie erwähnt, z. B. die Chip-Fläche, die LED-Fläche beziehungsweise das hochpixelierte LED usw. zu verstehen.

Jede Leuchteinrichtung wird in der Regel auf einer Scheibe hergestellt und am Ende dieses Prozesses aus der Scheibe ausgebrochen beziehungsweise ausgesägt. Beim Ausbrechen erfolgt zunächst typischerweise ein Ritzen mit einem Diamanten, so dass die Bruchlinie verhältnismäßig exakt definiert werden kann. Dennoch ergeben sich bei dem Brechen aber auch beim Sägen gewisse fertigungstechnische Toleranzen. Dies bedeutet aber, dass zwei unmittelbar aneinander gefügte Leuchteinrichtungen durch einen Spalt voneinander getrennt sind, dessen Breite variieren kann. Bei der Verwendung von Einzelepitaxien als Leuchteinrichtungen 4 ergeben sich typische Spaltbreiten von 0,02 bis 0,12 mm. Eine mittlere Spaltbreite von etwa 0,08 mm ergibt sich aus der Tatsache, dass eine Einzelepitaxie aus Sicherheitsgründen nicht exakt am Rand der äußersten LEDs gebrochen werden kann. Es wird vielmehr ein Sicherheitsrand eingehalten, um die äußersten LEDs nicht zu beschädigen.

Die Beleuchtungsvorrichtung wird mit Hilfe einer Steuereinrichtung 7 angesteuert. Diese ermöglicht es, dass jedes einzelne Pixel verkörpert durch ein jeweiliges Leuchtelement (z. B. Einzel-LED) individuell angesteuert werden kann. Als Eingangsgröße erhält die Steuereinrichtung 7 einen Messwert von einer Speichereinrichtung 8. Diese Speichereinrichtung 8 kann beispielsweise die Spaltbreite des Spalts 5 für die Steuereinrichtung 7 zur Verfügung stellen. Alternativ oder zusätzlich kann die Speichereinrichtung 8 auch eine Leuchtdichte in dem Spalt 5 für die Steuereinrichtung 7 bereitstellen. Gegebenenfalls kann die Speichereinrichtung 8 auch Werte für Leuchtdichten in anderen Bereichen der Leuchteinrichtungen 4 bereitstellen. Die Steuereinrichtung 7 verwendet eines oder mehrere solcher bereitgestellten Werte zum Steuern oder Regeln der Leuchtdichte der einzelnen Leuchteinrichtungen 4 beziehungsweise der einzelnen Leuchtelemente jeder der Leuchteinrichtungen. Dies bedeutet, dass die Steuereinrichtung 7 z. B. jede einzelne LED hinsichtlich ihrer Leuchtdichte steuern kann.

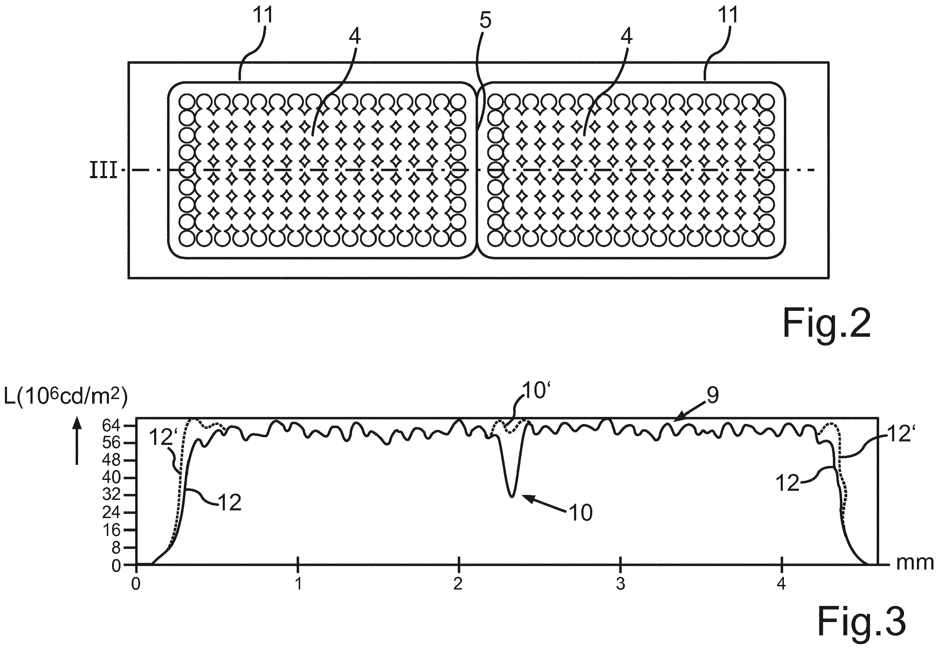

Fig. 2 zeigt eine Draufsicht auf den Leuchtbereich einer Beleuchtungsvorrichtung mit zwei Leuchteinrichtungen 4. Jede dieser Leuchteinrichtungen 4 besitzt hier 8 x 16 Leuchtelemente, z. B. LEDs. Es kann sich bei den Leuchteinrichtungen aber auch um quadratische Leuchtflächen handeln, bei denen gemäß dem Beispiel von Fig. 2 nur 50 Prozent der Pixel beziehungsweise Leuchtelemente eingeschaltet sind. Die Steuereinrichtung 7 betreibt die einzelnen LEDs beispielsweise mit Pulsweitenmodulation (PWM).

Je größer die Leuchtdichte ist, desto heller erscheint der jeweilige Bereich in Fig. 2. Helle Leuchtbereiche gehen ineinander über und dunklere Leuchtbereiche sind als geschlossene Kreise dargestellt. Bei den Kreisen handelt es sich um eine symbolische Darstellung der Leuchtdichten, während die Einzelchips beispielsweise durchaus quadratisch sein können. Die Leuchtdichtewerte können z.B. im Bereich von 0 bis 100 x 10⁶ cd/m² liegen. Es ist zu erkennen, dass die LEDs trotz gleicher Bestromung im Zentrum der Leuchteinrichtung 4 hell erscheinen, während sie nach außen hin etwas dunkler erscheinen. Dies ist der natürlichen Lichtverteilung geschuldet, gemäß der bei einer punktförmigen Lichtquelle die Leuchtdichte in radialer Richtung etwa gaußförmig abfällt. Dies wiederum bedeutet, dass die Leuchtdichte im Bereich einer Einzel-LED nicht nur von der Leuchtstärke dieser LED, sondern auch von den Leuchtstärken der LEDs in der Umgebung abhängt. Die Leuchtdichteverteilungen aller Einzel-LEDs beziehungsweise Leuchtelemente überlagern sich also zu einer Gesamtleuchtdichteverteilung.

Fig. 3 zeigt einen Schnitt III durch die zweidimensionale Leuchtdichteverteilung von Fig. 2. Diese Leuchtdichteverteilung entlang einer Zeile der Beleuchtungsvorrichtung zeigt zum einen eine Welligkeit 9, die sich aus der örtlichen Auflösung der Chip-Flächen aufgrund der Einzel-LEDs ergibt. In der Mitte zwischen den beiden Leuchteinrichtungen 4 befindet sich der Spalt 5. An der Stelle des Spalts besitzt die Leuchtdichteverteilung gemäß Fig. 3 ein lokales Minimum 10. Dieses ist umso stärker ausgeprägt, je breiter der Spalt 5 ist, wenn die am Spalt 5 angrenzenden Pixel beziehungsweise Leuchtelemente immer gleich angesteuert sind, z. B. mit 100 %.

Auch am Außenrand 11 jeder Leuchteinrichtung 4 nimmt die Leuchtdichte gegenüber den Zentralbereichen der Leuchteinrichtungen 4 ab, da dort jedes einzelne Leuchtelement weniger Nachbarn besitzt, die zur Leuchtdichte beitragen. Folglich ergibt sich an der äußersten Reiche der Leuchtelemente bereits ein deutlicher Abfall gegenüber der Leuchtdichte im Zentrum der Leuchteinrichtungen 4. Außerhalb der Leuchteinrichtungen 4 fällt die Leuchtdichte mit einer Flanke 12 ab.

Dieser Abfall der Leuchtdichte ist unerwünscht, kann aber durch die gezieltes Ansteuern der Randpixel beziehungsweise Leuchtelemente am Rand der Leuchteinrichtungen 4 reduziert werden. So ist es beispielsweise möglich, diejenigen Pixel beziehungsweise Leuchtelemente, die unmittelbar an den Spalt 5 angrenzen, gezielt zu einer höheren Leuchtdichte anzusteuern, damit das Übersprechen der einzelnen Leuchtelemente über den Spalt 5 hinaus stärker erfolgt. Dadurch kann sich im Spalt 5 eine Leuchtdichteverteilung 10' ergeben, die sich kaum mehr von der Welligkeit in den anderen Leuchtbereichen der Leuchteinrichtungen unterscheidet. Auch an den Außenrändern 11, die Randbereiche darstellen, an denen keine Leuchteinrichtungen angrenzen, kann die Leuchtstärke der einzelnen Leuchtelemente hochreguliert werden. Dadurch könnte dem sonstigen Abfall am Rand entgegengewirkt werden und es ergäbe sich unter Umständen ein verbesserter Flankenverlauf 12' an den Rändern 11.

Da jedoch die Spaltbreite fertigungstechnisch variiert, kann die Leuchtdichte an den Spalträndern nicht bei allen Leuchteinrichtungen beziehungsweise Beleuchtungsvorrichtungen gleich erhöht werden. Vielmehr ist eine individuelle Messung der Spaltbreite notwendig. Eine solche Messung kann beispielsweise am Ende der Produktion oder nach Einbau in einen Fahrzeugscheinwerfer erfolgen und ein entsprechender Messwert wird in der Beleuchtungsvorrichtung abgespeichert. Aus der gemessenen Spaltbreite kann auf das lokale Minimum 10 beziehungsweise die ausgleichende Erhöhung der Leuchtstärken der Leuchtelemente am Spaltrand beispielsweise mithilfe eines Modells geschlossen werden. Alternativ zur Messung der Spaltbreite kann auch die Leuchtdichte im Spalt direkt gemessen werden. Der Strom in den Leuchtelementen am Spaltrand kann dann beispielsweise solange erhöht werden, bis eine homogenere Lichtverteilung auch über den Spalt hinweg erreicht ist. Eine Optimierung hinsichtlich der Homogenität kann beispielsweise mithilfe von Montecarlo-Simulationen erfolgen. Dabei werden die Leuchtdichtewerte beispielsweise solange gemessen und variiert, bis ein verbesserter Wert auch im Spalt erreicht ist. Optimal wäre beispielsweise ein Mittelwert der Leuchtdichten über alle Leuchtdichten beziehungsweise über die Leuchtdichteverteilung im Zentralbereich der Leuchteinrichtungen. In ähnlicher Weise kann auch die Ansteuerung der Nachbarpixel der Randpixel ebenfalls angepasst werden, um einen weichen Verlauf der Leuchtdichte zu erreichen.

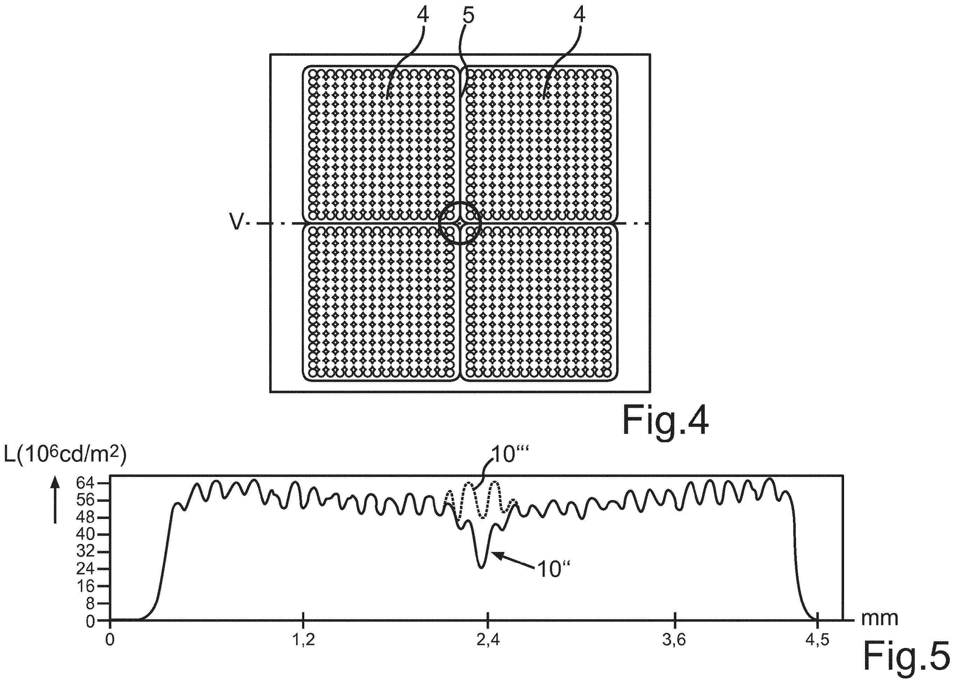

Fig. 4 zeigt eine Beleuchtungsvorrichtung mit vier quadratischen Leuchteinrichtungen 4, bei der alle Pixel beispielsweise mit 100 % angesteuert sind. Auch hier ergeben sich hellere Bereiche im Zentrum der Leuchteinrichtungen und dunklere Bereiche am Rand der jeweiligen Leuchteinrichtungen. Einen besonderen Leuchtdichteeinbruch gibt es am Kreuzungspunkt 6 der Einzelspalte. Dort sind die vier Eckpixel der vier sich auf der Lichtquelle befindlichen Leuchteinrichtungen 4 beteiligt. An dieser Stelle muss der Leuchtdichteanteil aller Eckpixel der vier beteiligten Leuchteinrichtungen bei der Einstellung berücksichtigt werden.

Fig. 5 zeigt einen horizontalen Schnitt V durch die Leuchtdichteverteilung von Fig. 4 (Der Schnitt V könnte ebenso vertikal verlaufen). Besonders markant ist hier das lokale Minimum 10" in der Nähe des Kreuzungspunkts 6. Um hier einen Ausgleich im Hinblick auf eine Homogenität auch im Kreuzungspunkt 6 zu erreichen, müssen die Eckpunkte der vier beteiligten Leuchteinrichtungen 4 entsprechend hoch angesteuert werden, um gegebenenfalls einen Leuchtdichteverlauf 10''' mit hoher Homogenität auch im Kreuzungspunktbereich zu erreichen.

Die generelle Homogenität der Leuchtdichte der einzelnen Leuchtelemente beziehungsweise Pixel kann beispielsweise gewährleistet werden, indem nach einmaliger Messung aller Pixel eine Korrekturmatrix softwaretechnisch hinterlegt wird. Diese Messung kann wahlweise gepulst im "kalten" Zustand, d. h. bei Umgebungstemperatur, als auch im thermisch eingeschwungenen Betriebszustand durchgeführt werden. Die Orientierung der Leuchtanordnung im Realbetrieb, also beispielsweise in einem Fahrzeug-Scheinwerfer, ist vertikal, also mit im Wesentlichen horizontal legender Flächennormale der Abstrahlfläche. Auch die Korrekturmatrix wird bevorzugt im vertikalen Betriebsmodus der Leuchtanordnung ermittelt.

Die vorliegende Erfindung lässt sich nicht nur auf phosphorkonvertierte weiß-emittierende Leuchtelemente anwenden, sondern auch auf Leuchtanordnungen, bei denen die Chip-Flächen mit farbig-konvertierendem, zum Beispiel rotem oder grünem, Leuchtstoff versehen sind, die und in Teil- oder Vollkonversion arbeiten.

Weiterhin lässt sich die vorliegende Erfindung auch auf flächige Chip-Anordnungen anwenden, bei denen der Spalt entlang einer gekrümmten Linie verläuft, beispielsweise entlang eines kreissegmentförmigen Bogens. In so einem Fall ist die eine Begrenzungsfläche der Chipanordnung konvex, die der gegenüberliegenden Chipanordnung konkav ausgestaltet.

Obwohl es bevorzugt ist, dass alle Flächen der einzelnen Leuchtelemente (Pixel) gleich groß sind, lässt sich die vorliegende Erfindung auch auf Leuchtelementanordnungen anwenden, bei denen die Chipflächen der einzelnen Lichtpixel unterschiedlich groß ausgestaltet sind.
Die vorliegende Erfindung ist auch auf eine Matrix-artige Anordnung von pixelierten, organischen Leuchtdioden (OLED) anwendbar.

## Patentansprüche

1. Verfahren zum Betreiben einer Beleuchtungsvorrichtung, die mindestens zwei, jeweils durch einen Spalt (5) getrennte, nebeneinander angeordnete Leuchteinrichtungen (4) mit jeweils einer Vielzahl an Leuchtelementen aufweist, beinhaltend
- einzelnes Ansteuern aller Leuchtelemente jeder Leuchteinrichtung (4), **gekennzeichnet durch**
- Messen einer Spaltbreite des jeweiligen Spalts (5) und/oder einer Leuchtdichte in dem jeweiligen Spalt (5) während alle Leuchtelemente angesteuert sind;
- Speichern der gemessenen jeweiligen Spaltbreite und/oder Leuchtdichte; und
- Steuern oder Regeln jeweils einer Leuchtdichte eines oder mehrerer der Leuchtelemente, die unmittelbar an dem jeweiligen Spalt angeordnet sind, in Abhängigkeit von der gemessenen Spaltbreite und/oder von der gemessenen Leuchtdichte in dem jeweiligen Spalt.

2. Verfahren nach Anspruch 1, wobei zusätzlich ein Messen jeweils einer Leuchtdichte des einen oder der mehreren der Leuchtelemente, die unmittelbar an dem jeweiligen Spalt (5) angeordnet sind, erfolgt und das Steuern oder Regeln auch in Abhängigkeit von dem/den entsprechenden Messwert/Messwerten erfolgt.

3. Verfahren nach Anspruch 1 oder 2, wobei bei dem Steuern oder Regeln eine Leuchtdichte eines der Leuchtelemente, die unmittelbar an dem jeweiligen Spalt (5) angeordnet sind, an eine mittlere Leuchtdichte aller oder einer Vielzahl der Leuchtelemente der Leuchteinrichtungen (4) angepasst wird.

4. Verfahren nach einem der vorhergehenden Ansprüche, wobei von dem Steuern oder Regeln auch diejenigen Leuchtelemente betroffen sind, die in zweiter und/oder dritter Reihe hinter den unmittelbar am jeweiligen Spalt (5) angeordneten Leuchtelementen liegen.

5. Verfahren nach einem der vorhergehenden Ansprüche, wobei die Beleuchtungsvorrichtung mindestens eine weitere Leuchteinrichtung (4) aufweist, jeweils eine Ecke jeder der Leuchteinrichtungen (4) aneinander angeordnet sind, und zu dem Steuern oder Regeln eines Leuchtelements an einer der Ecken einer der Leuchteinrichtungen (4) je eine Leuchtdichte eines Leuchtelementes jeder anderen der Ecken berücksichtigt wird.

6. Verfahren nach einem der vorhergehenden Ansprüche, wobei bei dem Steuern oder Regeln eine Leuchtdichte eines der Leuchtelemente, die an einem Randbereich, an welchen keine Leuchteinrichtung (4) unmittelbar angrenzt, der jeweiligen Leuchteinrichtung (4) angeordnet sind, an eine mittlere Leuchtdichte aller Leuchtelemente der Leuchteinrichtungen (4) angepasst wird.

7. Verfahren nach einem der vorhergehenden Ansprüche, wobei das Steuern oder Regeln mit Hilfe einer Korrekturmatrix erfolgt.

8. Verfahren nach einem der Ansprüche 2 bis 7, wobei das Messen der Leuchtdichte gepulst bei Umgebungstemperatur oder in einem thermisch eingeschwungenen Ein-Zustand erfolgt.

9. Beleuchtungsvorrichtung für ein Kraftfahrzeug mit
- mindestens zwei, jeweils durch einen Spalt (5) getrennte, nebeneinander angeordnete Leuchteinrichtungen (4) mit jeweils einer Vielzahl an Leuchtelementen, und
- einer Steuereinrichtung (7) zum einzelnen Ansteuern aller Leuchtelemente jeder Leuchteinrichtung (4),
**gekennzeichnet durch**
- eine Speichereinrichtung zum Bereitstellen eines Maßes einer Spaltbreite des jeweiligen Spalts (5) und/oder einer Leuchtdichte in dem jeweiligen Spalt, wobei
- die Steuereinrichtung (7) ausgebildet ist zum Steuern oder Regeln jeweils einer Leuchtdichte eines oder mehrerer der Leuchtelemente, die unmittelbar an dem jeweiligen Spalt (5) angeordnet sind, in Abhängigkeit von der Spaltbreite und/oder von der Leuchtdichte in dem jeweiligen Spalt.

10. Kraftfahrzeug mit einer Beleuchtungsvorrichtung nach Anspruch 9.

## Claims

1. Method for operating an illumination apparatus, having at least two light-emitting devices (4), which are arranged next to one another each separated by a gap (5) and each have a multiplicity of light-emitting elements, containing
- individually driving all light-emitting elements of each light-emitting device (4),
**characterized by**
- measuring a gap width of the respective gap (5) and/or a luminance in the respective gap (5) while all light-emitting elements are driven;
- storing the measured respective gap width and/or luminance; and
- controlling or regulating in each case a luminance of one or more of the light-emitting elements which are arranged directly at the respective gap in dependence on the measured gap width and/or on the measured luminance in the respective gap.

2. Method according to Claim 1, wherein additionally a measurement of in each case a luminance of the one or more of the light-emitting elements which are arranged directly at the respective gap (5) is performed and
controlling or regulating is also performed in dependence on the corresponding measurement value/values.

3. Method according to Claim 1 or 2, wherein, during the controlling or regulating, a luminance of one of the light-emitting elements that are arranged directly at the respective gap (5) is adapted to an average luminance of all the light-emitting elements, or a multiplicity of the light-emitting elements, of the light-emitting devices (4).

4. Method according to one of the preceding claims, wherein the light-emitting elements located in a second and/or third row behind the light-emitting elements that are arranged directly at the respective gap (5) are also affected by the controlling or regulating.

5. Method according to one of the preceding claims, wherein the illumination apparatus has at least one further light-emitting device (4), wherein a respective corner of each of the light-emitting devices (4) are arranged in mutually adjoining fashion and, for controlling or regulating a light-emitting element at one of the corners of one of the light-emitting devices (4), in each case a luminance of a light-emitting element of each of the other corners is taken into consideration.

6. Method according to one of the preceding claims, wherein, during the controlling or regulating, a luminance of one of the light-emitting elements that are arranged at an edge region of the respective light emitting device (4) that is not directly adjoined by a light-emitting device (4) is adapted to an average luminance of all light-emitting elements of the light-emitting devices (4).

7. Method according to one of the preceding claims, wherein controlling or regulating is performed using a correction matrix.

8. Method according to one of Claims 2 to 7, wherein the measurement of the luminance is performed in pulsed fashion at ambient temperature or in a thermally stabilized on-state.

9. Illumination apparatus for a motor vehicle, having
- at least two light-emitting devices (4), which are arranged next to one another each separated by a gap (5) and each have a multiplicity of light-emitting elements, and
- a control device (7) for individually driving all light-emitting elements of each light-emitting device (4), **characterized by**
- a memory device for providing a measurement of a gap width of the respective gap (5) and/or a luminance in the respective gap, wherein
- the control device (7) is configured for controlling or regulating in each case a luminance of one or more of the light-emitting elements which are arranged directly at the respective gap (5) in dependence on the gap width and/or on the luminance in the respective gap.

10. Motor vehicle having an illumination apparatus according to Claim 9.

## Revendications

1. Procédé pour faire fonctionner un dispositif d'éclairage qui comprend au moins deux dispositifs lumineux (4), disposés côte à côte, séparés respectivement par une fente (5), comportant chacun une pluralité d'éléments lumineux, avec commande individuelle de tous les éléments lumineux de chaque dispositif lumineux (4), **caractérisé par** :
- la mesure d'une largeur de fente de chaque fente (5) et/ou d'une luminance dans la fente (5) respective pendant la commande de tous les éléments lumineux,
- la mémorisation de la largeur de fente mesurée respective et/ou luminance, et,
- la commande ou régulation de chacune des luminances d'un ou plusieurs élément(s) lumineux qui est/sont disposé(s) directement au niveau de la fente respective, en fonction de la largeur de fente mesurée, et/ou de la luminance mesurée dans la fente respective.

2. Procédé selon la revendication 1, dans lequel, en plus, il est effectué une mesure de chacune des luminances d'un ou plusieurs élément(s) lumineux, qui est/sont disposé(s) directement au niveau de la fente (5) respective et la commande ou la régulation s'effectue également en fonction de la valeur de mesure correspondante/des valeurs de mesure correspondantes.

3. Procédé selon la revendication 1 ou 2, dans lequel, lors de la commande ou de la régulation, une luminance d'un des éléments lumineux qui sont disposés directement au niveau de la fente (5) respective, est adaptée à une luminance moyenne de tous ou d'une pluralité des éléments lumineux des dispositifs lumineux (4).

4. Procédé selon l'une des revendications précédentes, dans lequel la commande ou la régulation concerne également les éléments lumineux qui sont situés dans la deuxième et/ou troisième rangée derrière les éléments lumineux disposés directement au niveau de la fente (5) respective.

5. Procédé selon l'une des revendications précédentes, dans lequel le dispositif d'éclairage comporte au moins un autre dispositif lumineux (4), et à chaque fois, un coin, de chacun des dispositifs lumineux (4), est juxtaposé à l'autre, et pour la commande ou la régulation d'un élément lumineux, au niveau d'un des coins d'un des dispositifs lumineux (4), est prise en compte une luminance d'un élément lumineux de chaque autre des coins.

6. Procédé selon l'une des revendications précédentes, dans lequel, lors de la commande ou de la régulation, une luminance d'un des éléments lumineux qui sont disposés au niveau d'une zone marginale au niveau de laquelle aucun dispositif lumineux (4) ne jouxte directement, du dispositif lumineux (4) respectif, est adaptée à une luminance moyenne de tous les éléments lumineux des dispositifs lumineux (4).

7. Procédé selon l'une des revendications précédentes, dans lequel la commande ou la régulation est effectuée à l'aide d'une matrice de correction.

8. Procédé selon l'une des revendications 2 à 7, dans lequel est effectuée la mesure de la luminance, pulsée à température ambiante ou dans un mode «marche» de stabilité thermique.

9. Dispositif d'éclairage pour un véhicule automobile avec :
- au moins deux dispositifs lumineux (4), disposés côte à côte, séparés respectivement par une fente (5), comportant chacun une pluralité d'éléments lumineux, et,
- un dispositif de commande (7) pour commander individuellement tous les éléments lumineux de chaque dispositif lumineux (4),
**caractérisé par** :
- un dispositif de mémorisation pour fournir une dimension d'une largeur de fente de la fente (5) respective et/ou d'une luminance dans la fente respective, dans lequel
- le dispositif de commande (7) est réalisé pour la commande ou la régulation de chacune des luminances d'un ou plusieurs élément(s) lumineux qui est/sont disposé(s) directement au niveau de la fente (5) respective, en fonction de la largeur de fente, et/ou de la luminance dans la fente respective.

10. Véhicule automobile équipé d'un dispositif d'éclairage selon la revendication 9.
